# EUROPEAN PATENT APPLICATION

(11) **EP 3 225 900 A1**
(43) Date of publication of application: **04.10.2017**
(21) Application number: 16305374.7
(22) Date of filing: 30.03.2016
(51) Int. Cl.: F17C 1/16, B29C 70/32, B65H 54/02, D04C 3/40, B29C 70/24

(54) **PRESSURE VESSEL AND METHOD FOR FORMING AN OUTER LAYER OF A PRESSURE VESSEL**

(71) Applicant: Plastic Omnium Advanced Innovation and Research, 1120 Bruxelles (BE)
(72) Inventor: PERROT, Alice, 1070 Anderlecht (BE); CRIEL, Bjorn, 1750 SINT-MARTENS-LENNIK (BE)
(74) Representative: Potdevin, Emmanuel Eric

(57) **Abstract**

A method for forming an outer layer (2, 3) around a liner (1) having a cylindrical portion (1a), in order to obtain a pressure vessel. The method comprises: forming one or more hoop wrapping layers (2) by wrapping one or more first fibre bundles with a first fibre angle between 80 and 100 degrees with respect to the axial direction of the cylindrical portion (1a); and forming one or more braided layers (3) by braiding one or more second fibre bundles with a second fibre angle below 75 degrees with respect to the axial direction of the cylindrical portion (1a). The one or more hoop wrapping (2) and braided (3) layers together form an outer layer around the cylindrical portion (1a), wherein preferably the hoop wrapping layers (2) comprise between 5 and 30 weight percent of the total fibre content of the outer layer; and the braided layers (3) comprises between 70 and 95 weight percent thereof.

## Description

### Field of Invention

The field of the i nventi on rel ates to the manufacturing of pressure vessels by wrappi ng an outer layer around a liner. Particular embodiments relate to a method for forming an outer layer to be arranged around a liner of a pressure vessel, to a pressure vessel manufactured according to the method, and to a machine used for manufacturing a pressure vessel.

### Background

Existing methods for manufacturing pressure vessels, such as CNG (Compressed Natural Gas) tanks, C H G (Compressed Hydrogen Gas) tanks, LPG (Liquefied Petroleum Gas) tanks or the like, produce a relatively light weight vessel by forming a fibre reinforced plastics (FRP) layer on the peri phery of a hollow cylindrical liner.

A f i rst pri or art method lays a ci rcumferenti al wi ndi ng, al so caled a hoop wi ndi ng or a hel i cal winding around the liner. Two types may be distinguished: a FW (Filament Winding) method and a TW (Tape W i ndi ng) method. The FW method may be a method in which fibre bundl es are impregnated with resin beforehand to prepare a tow shaped prepreg and an FRP layer is formed by wi ndi ng the tow shaped prepreg on the liner, or a method in which fi bre bundl es whi ch are fed in a predetermi ned di recti on are impregnated with resin to be wound around a liner. The TW method i s a method in which a tape shaped prepreg is wound around the liner to form an FRP layer. In such embodiments, typically the liner or the mandrel is rotated to apply a filament or tape from a spool and the spool, optionally with resin bath, is moved in the axial direction of the liner. For a hoop wi ndi ng, the wi ndi ng angle is typically between 80 and 100 degrees, e.g. just below 90 degrees. For a helical winding the winding angle may be e.g. between 10 and 60 degrees.

A second prior art method is the so-called "braiding₋ method in which a braider is used to form a body on the periphery of the liner by braiding a plurality of fibre bundles, and the body is impregnated with resin to be cured to form the FRP layer. The brai di ng method shortens the manufacturing time and reduces the manufacturing cost of the pressure vessel compared with the case of applying the FW method or the TW method, because the entire braided layer can be laid in one pass. Further, vessels with a braided outer layer are better suited to resist explosion since it is avoided due to the fibre interlocking that small vessel parts can burst away when an expl osi on in the vessel takes place.

In vessels with hoop windings and in vessels with a braided outer layer, typically the fibre cost is dominant. T herefor it is desirably to reduce the amount of fibres used for producing a vessel with a predetermined strength.

### Summary

Embodiments of the invention aim to provide a method allowing reducing the amount of fibres used for producing a pressure vessel with a predetermined strength.

A ccordi ng to a fi rst aspect of the i nventi on, there is provided a method for forming an outer layer around a cylindrical porti on of liner in order to obtain a pressure vessel. The method comprises forming one or more hoop wrapping layers by wrapping one or more first fibre bundles with a first fibre angle between 80 and 100 degrees with respect to the axial direction of the cylindrical portion; and forming one or more braided layers by braiding one or more second fibre bundles with a second fibre angle below 75 degrees with respect to the axial direction of the cylindrical portion. The forming of the one or more hoop wrappi ng and braided layers is performed such that said one or more hoop wrappi ng and braided layers together form an outer layer around a liner, sai d outer layer containing a total fibre content Further, the one or more hoop wrapping layers are formed such that they comprise between 5 and 30 weight percent of the total fibre content of the outer layer; and said one or more braided layers are formed such that they comprise between 70 and 95 weight percent of the total fi bre content

In the context of the present appl icati on the term 'wrapping_ refers to all types of wrappi ng, e.g. filament wi ndi ng, brai di ng, etc. In other words the hoop wrappi ng layer may be a filament wi ndi ng layer, a braided layer, etc.

Embodiments are based inter alia on the inventive insight that by combining one or more 'hoop_ wrapping layers, i.e. wrapping layers with a first fibre angle between 80 and 100 degrees, with one or more braided layers with a second fibre angle below 75 degrees, in accordance with a particular balance between the fibre content in the one or more hoop wrapping layers and the fibre content in the one or more braided layers, higher pressures can be better resisted with a lower amount of fibres. Further, the one or more hoop wrapping layers will be better suited to withstand radial forces while the one or more braided layers are suited to withstand axial forces.

It is noted that, according to the first aspect, a braided layer may be applied before and/or after a hoop wrapping layer or a braided layer. In other words, any sequence of hoop wrapping and braided layers is possible, e.g. liner - hoop wrappi ng layer - braided layer, liner - braided layer - hoop wrapping layer, liner - hoop wrapping layer - braided layer ⁻ hoop wrapping layer, liner - braided layer - hoop wrapping layer ⁻ braided layer, etc.

A ccordi ng to an exempl ary embodi ment, the fi rst fi bre angle is between 82 and 98 degrees, more preferably between 85 and 95 degrees.

A ccordi ng to an exempl ary embodi ment, the second fibre angle is below 70 degrees, more preferably below 65 degrees. In an exemplary embodiment, the second fibre angle is between 30 and 75 degrees, preferably between 30 and 70 degrees, more preferably between 30 and 65 degrees, e.g. between 40 and 60 degrees.

According to an exemplary embodiment, the forming of the one or more hoop wrapping layers and braided layers is such that a braided layer of the one or more braided layers is formed around a hoop wrapping layer of the one or more hoop wrapping layers. By applying a braided layer around a hoop wrapping layer, the burst resistance is improved since the braided layer avoids that small parts burst away in the event of an explosion.

A ccordi ng to an exempl ary embodi ment, a hoop wrappi ng layer of the one or more hoop wrappi ng layers is formed directly on top of the liner. In that way, the hoop wrapping layer will be able to absorb a larger portion of the radial forces, and the one or more braided layers can provide burst resistance.

A ccordi ng to a preferred embodi ment, the one or more hoop wrappi ng layers are formed such that they comprise between 5 and 25 weight percent of the total fibre content of the outer layer; and the one or more braided layers are formed such that they comprise between 75 and 95 weight percent of the total fibre content. More preferably, the one or more hoop wrapping layers are formed such that they comprise between 5 and 20 weight percent of the total fibre content of the outer layer; and the one or more braided layers are formed such that they comprise between 80 and 95 weight percent of the total fibre content.

A ccordi ng to a preferred embodi ment, a hoop wrappi ng layer of the one or more hoop wrappi ng layers is formed by arranging a hoop winding with a winding angle between 80 and 100 degrees with respect to the axial direction of the liner, more preferably between 85 and 95 degrees. Such wi ndi ng angl es will allow a good absorpti on of the radi al forces.

A ccordi ng to an exempl ary embodi ment, the one or more hoop wrappi ng layers are appl i ed by a wrapping assembly whilst moving the liner in the axial direction. According to an exemplary embodiment, the one or more braided layers are applied by moving the liner through a braiding assembly. In a possible embodiment, the various layers are applied in consecutive movement passes, e.g. a first movement pass through a wrapping assembly followed by a second movement pass through a braiding assembly. However, in a preferred embodiment, a hoop wrapping layer of the one or more hoop wrappi ng layers is applied by movi ng the liner through the wrappi ng assembly, whilst moving the liner through a braiding assembly such that a braided layer of the one or more braided layers is applied after sai d hoop wrappi ng layer duri ng the same movement pass of the liner. In another embodiment, a braided layer of the one or more braided layers is applied by moving the liner through a braiding assembly, whereupon a hoop wrappi ng layer is applied immediately after the appl i cati on of said braided layer by the wrapping assembly, downstream of the braiding assembly, such that a hoop wrapping layer of the one or more hoop wrapping layers is applied after sai d braided layer duri ng the same movement pass of the liner.

According to an exemplary embodiment, the wrapping assembly comprises at least one hoop winding head configured to apply a winding layer by rotating the at least one hoop winding head around the liner. According to another embodiment, the wrapping assembly may be a braiding assembly configured to apply the first fibre bundles with a fibre angle between 80 and 100 degrees. In a possible embodiment, the brai di ng assembly for applying the fi rst fi bres comprises weft and warp spools, wherein only the warp spools or only the weft spools may be used. For example, only one warp spool may be operated to apply one first fibre bundle (also called first yarn) with a first fibre angle between 80 and 100 degrees, or a plurality of warp spools may be operated to apply a plurality of first fibre bundles (also called a plurality of first yarns) simultaneously. In yet another possible embodiment, the braiding assembly for applying the first fibres comprises weft and warp spools, a stem yarn application means. Also, in such an embodiment only one or more warp spools or only one or more weft spools may be operated. For example, one or more warp spools may be operated to apply one or more first fi bre bundl es with a fi rst fi bre angle between 80 and 100 degrees, and the stem yarn appl i cati on means may be operated to apply a further fi rst fi bre bundle extending in the axial direction of the liner (also called stem yarn), simultaneously. Optionally a controller may be added to control the spools to be used. However, it is also possible to use a standard braiding assembly and to provide only the spools that need to be used with yarn.

According to an exemplary embodiment, the forming of the one or more hoop wrapping layers and braided layers is such that a braided layer of the one or more braided layers is formed directly on top of a hoop wrappi ng layer of the one or more hoop wrappi ng layers.

According to an exemplary embodiment, the forming of the one or more hoop wrapping layers and braided layers is such that a braided layer of the one or more braided layers is formed directly on top of a hoop wrappi ng layer of the one or more hoop wrappi ng layers, and that a further hoop wrappi ng layer of the one or more hoop wrappi ng layers is formed di rectly on top of sai d braided layer. By having the combination hoop wrapping layer ⁻ braided layer ⁻ further hoop wrapping layer, the further hoop wrappi ng layer may compress the braided layer, further i mprovi ng the strength of the pressure vessel.

According to an exemplary embodiment, the forming of the one or more hoop wrapping layers and braided layers is such that a hoop wrapping layer of the one or more hoop wrapping layers is formed directly on top of a braided layer of the one or more braided layers, and that a further braided layer of the one or more braided layers is formed directly on top of said hoop wrapping layer. By having the combination braided layer ⁻ hoop wrapping layer ⁻ further braided layer, the strength of the pressure vessel can be further improved, wherein e.g. a different fibre bundle material and/or a different angle may be used for the braided layer and the further braided layer.

According to an exemplary embodiment, the forming of the one or more hoop wrapping layers and braided layers is such that a braided layer of the one or more braided layers is formed directly on top of a hoop wrappi ng layer of the one or more hoop wrappi ng layers, and that a further hoop wrappi ng layer of the one or more hoop wrappi ng layers is formed di rectly on top of said braided layer. By having the combination hoop wrapping layer ⁻ braided layer ⁻ further hoop wrapping layer, the further hoop wrapping layer may be made of glass fibre, further improving the impact resistance of the pressure vessel.

A ccordi ng to an exempl ary embodi ment, the one or more fi rst and/or the one or more second fi bre bundl es compri se any one or more of the following: a commi ngl ed yarn compri si ng f i bre fi laments and thermoplastic filaments, a thermoplastic prepreg, a tape comprising fibre filaments and a thermoplastic or thermoset prepreg. Depending on the type of first and/or second bundles that are being used, there may be performed a suitable post-processing of the liner with outer layer, e.g. heating the outer layer, or applying resin around the first and/or second bundles.

A ccordi ng to another aspect of the i nventi on, there is s provided a pressure vessel compri si ng a liner having a cylindrical portion and an outer layer around said cylindrical portion comprising a resin. The outer layer comprises one or more hoop wrappi ng layers of one or more f i rst fi bre bundl es, sai d one or more hoop wrappi ng layers bei ng wrapped with a fi rst fibre angle between 80 and 100 degrees with respect to the axial direction of the cylindrical portion; and one or more braided layers of one or more second fibre bundles, said one or more braided layers being braided with a second fi bre angle bel ow 75 degrees with respect to the axi al di recti on of the cylindrical porti on. The one or more hoop wrapping layers and braided layers form together an outer layer around the liner. The outer layer contains a total fibre content The one or more hoop wrapping layers comprise between 5 and 30 weight percent of the total fibre content of the outer layer, and the one or more braided layers comprise between 70 and 95 weight percent of the total fibre content.

A ccordi ng to an exempl ary embodi ment, the fi rst fi bre angle is between 82 and 98 degrees, more preferably between 85 and 95 degrees. According to an exemplary embodiment, the second fibre angle is below 70 degrees, more preferably below 65 degrees. In an exemplary embodiment, the second fibre angle is between 30 and 75 degrees, preferably between 30 and 70 degrees, more preferably between 30 and 65 degrees.

Preferably, the one or more hoop wrapping layers comprise between 5 and 25 weight percent of the total fibre content of the outer layer, and the one or more braided layers comprise between 75 and 95 weight percent of the total fibre content. More preferably, the one or more hoop wrapping layers comprise between 5 and 20 weight percent of the total fibre content of the outer layer, and the one or more braided layers comprise between 80 and 95 weight percent of the total fi bre content

A ccordi ng to an exempl ary embodi ment, a braided layer of the one or more braided layers is arranged around a hoop wrapping layer of the one or more hoop wrapping layers. Preferably, a hoop wrappi ng layer of the one or more hoop wrappi ng layers is arranged di rectly around the liner.

A ccordi ng to a preferred embodi ment, a hoop wrappi ng layer of the one or more hoop wrappi ng layers comprises a hoop winding, said hoop winding being arranged with a winding angle between 80 and 100 degrees, and more preferably between 85 and 95 degrees with respect to the axial di recti on of the liner.

A ccordi ng to an exempl ary embodi ment, a braided layer of the one or more braided layers is arranged di rectly on top of a hoop wrappi ng layer of the one or more hoop wrappi ng layers.

A ccordi ng to an exempl ary embodi ment, a further hoop wrappi ng layer of the one or more hoop wrapping layers is formed directly on top of the braided layer.

A ccordi ng to an exempl ary embodi ment, a hoop wrappi ng layer of the one or more hoop wrappi ng layers is arranged directly on top of a braided layer of the one or more braided layers, and a further braided layer of the one or more braided layers is arranged directly on top of said hoop wrapping layer.

A ccordi ng to an exempl ary embodi ment, the one or more fi rst and/or the one or more second fi bre bundl es compri se any one or more of the following: fibres in a resin matrix, a commi ngl ed yarn comprising fibre filaments and thermoplastic filaments, a thermoplastic prepreg, a tape comprising fibre filaments and a thermoplastic prepreg, a towpreg.

According to yet another aspect of the invention there is provided an apparatus for forming an outer layer around a liner in order to obtain a pressure vessel. The apparatus comprises a wrapping assembly configured to wrap a wrapping layer around a liner by wrapping one or more first fibre bundles, preferably with a first fibre angle between 80 and 100 degrees; and a braiding assembly configured to form a braided layer around a liner by braiding one or more second fibre bundles, preferably with a second fibre angle (also called braid angle) below 75 degrees. The wrapping assembly and the braiding assembly are arranged in-line such that the wrapping layer can be applied by moving the liner through the wrapping assembly, whilst moving the liner through the brai di ng assembly such that the braided layer is applied di rectly after or before the wrapping layer duri ng the same movement pass of the liner.

A ccordi ng to an exemplary embodiment, the wrapping assembly comprises at least one hoop winding head configured to apply a winding layer by rotating the at least one hoop winding head around the liner. According to another embodiment, the wrapping assembly may be a braiding assembly configured to apply the first fibre bundles with a fibre angle between 80 and 100 degrees. In a possible embodiment, the brai di ng assembly for applying the fi rst fi bres comprises weft and warp spools and is operated to rotate only warp spools or only weft spools. For example, only one warp spool may be operated to apply one fi rst fibre bundle (al so called fi rst yarn) with a fi rst fi bre angle between 80 and 110 degrees, or a plurality of warp spools may be operated to apply a plurality of first fibre bundles (also called a plurality of first yarns) simultaneously. In another possible embodiment, the braiding assembly for applying the first fibres comprises weft and warp spool s, a stem yarn appl i cati on means. For example, one or more warp spools may be operated to apply one or more first fibre bundles with a first fibre angle between 80 and 110 degrees, and the stem yarn appl i cati on means may be operated to apply a further fi rst fi bre bundle extending in the axial direction of the liner (also called stem yarn), simultaneously.

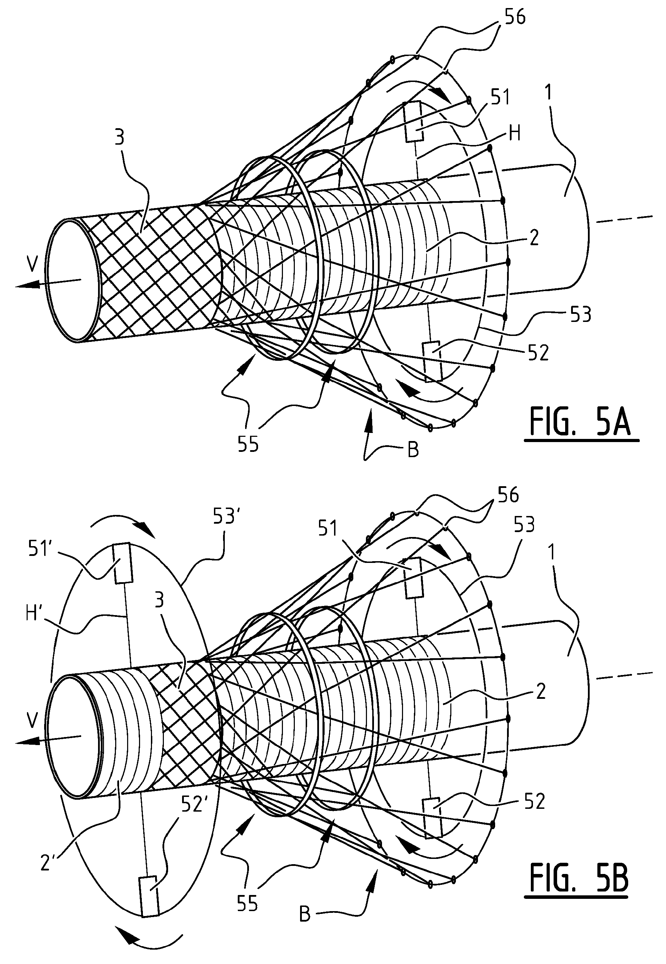

In a preferred embodiment, the wrapping assembly, e.g. comprising the at least one winding head, is arranged upstream of the at least one braiding assembly, such that a braided layer can be applied on a wrappi ng layer. In such an embodiment the wrapping assembly is preferably surrounded at least partially by the braiding assembly, resulting in a compact apparatus which can apply a wrapping layer and a braided layer in one movement pass. More in particular, the wrapping assembly may be arranged at least partially in an area delimited by the yarns (i.e. the one or more second fibre bundles) used by the braiding assembly, as illustrated in the embodiment of figure 5A.

A ccordi ng to another aspect of the i nventi on, there is provided a method and a pressure vessel accordi ng to any one of the following clauses:
1. A method for forming an outer layer around a liner in order to obtain a pressure vessel, said method comprising: forming a winding layer (2) around a liner (1) by winding a first fibre bundle around the liner; forming a braided layer (3) on sai d wi ndi ng layer by brai di ng a second fi bre bundle around the winding layer.
2. The method of clause 1, wherein the wi ndi ng layer is formed by arranging a hoop wi ndi ng around the mandrel of the liner, sai d hoop wi ndi ng bei ng arranged with a wi ndi ng angle between 75 and 105 degrees with respect to the axial direction of the mandrel or the liner, preferably between 80 and 100 degrees.
3. The method of any one of the previous clauses, wherein the wi ndi ng layer is applied by rotati ng at least one hoop winding head around the liner whilst moving the liner in the axial direction.
4. The method of any one of the previous clauses, wherein the braided layer is applied by moving the liner through a braiding assembly.
5. The method of any one of the previous clauses, wherein the winding layer is applied by rotating at least one hoop winding head around the liner whilst moving the liner through a braiding assembly such that the braided layer is applied after the winding layer during the same movement pass of the liner.
6. The method of any one of the previous clauses, wherein before applying the winding layer, an intermediate layer (3°) is formed on the liner such that said intermediate layer extends between the liner and the wi ndi ng layer, and the outer layer around the liner comprises the i ntermedi ate layer, the winding layer and the braided layer.
7. The method of any one of the previous clauses, wherein after applying the braided layer, a third layer (2°) is formed on the braided layer such that the outer layer around the liner comprises the winding layer, the braided layer and the third layer.
8. The method of any one of the previous clauses, wherein the first fibre bundle is applied as an dry fibre bundle and/or wherein the second bundle is applied as an dry fibre bundle, and wherein a resin is applied after forming sai d winding layer and/or sai d braided layer.
9. The method of any one of the previous clauses, wherein the first and/or the second fibre bundle comprises any one of the following: a commingled yarn comprising fibre filaments and thermoplastic filaments, a thermoplastic prepreg, a tape comprising fibre filaments and a thermoplastic prepreg.
10. The method of any one of the previous clauses, wherein the braided layer is applied with a fibre angle (also called braid angle) below 70 degrees, preferably below 65 degrees, more preferably between 30 and 65 degrees.
11. A pressure vessel comprising a liner and an outer layer, said outer layer comprising: a winding layer (2) comprising a winding of a first fibre bundle, a braided layer (3) comprising a second fibre bundle, said braided layer being arranged on said winding layer, wherein said outer layer comprises a resin.
12. The pressure vessel of clause 11, wherein the wi ndi ng is a hoop wi ndi ng arranged with a winding angle between 75 and 105 degrees with respect to the axial direction of the mandrel or the liner preferably between 80 and 100 degrees.
13. The pressure vessel of clause 11 or 12, wherein the outer layer comprises an intermediate layer (3°) compri si ng a braided fi bre bundle between the liner and the wi ndi ng layer.
13. The pressure vessel of any one of the clauses 10-12, wherein the outer layer comprises a third layer (2°) on the braided layer, said third layer comprising a hoop winding.
14. The pressure vessel of any one of the clauses 11-13, wherein the braided layer is arranged with a fi bre angle (also called braid angle) below 70 degrees, preferably below 65 degrees, more preferably between 30 and 65 degrees.

A ccordi ng to another aspect of the i nventi on, there is provided a method and a pressure vessel according to any one of the clauses above, but where the winding layer is replaced with a 'hoop_ braided layer having a first fibre angle between 80 and 100 degrees, and wherein the braided layer has a second fibre angle below 70 degrees, preferably below 65 degrees, more preferably between 30 and 65 degrees.

According to an exemplary embodiment, the volume of the pressure vessel is between 4 and 150 litres. In an exemplary embodiment, the length of the pressure vessel is between 350 mm and 1500 mm, and the diameter of the vessel is between 100 and 600 mm. The thickness of the liner is typically between 1 and 3 mm. The thickness t of the outer layer is typically between 5 and 50 mm.

According to an exemplary embodiment, the pressure vessel is configured to store any one of the following: hydrogen gas, liquid petroleum gas (LPG), compressed natural gas (CNG), or ammonia. According to an exemplary embodiment, the liner is moulded from a material having good gas barrier properties, e.g. blow moulded, injection moulded or rotation moulded. In an exemplary embodiment, the liner is moulded from any one or more of the following materials: polyami de, high-density polyethylene, a metallic material such as an aluminium base alloy or the like, a thermoplastic coextruded structure.

A ccordi ng to an exempl ary embodi ment, the liner comprises a cylindrical porti on and two dome portions formed at both ends of the cylindrical portion. A metal mouth pi ece may be attached to the top of each dome portion.

A ccordi ng to an exempl ary embodi ment, the first fibre bundl es are prepared by bundl i ng fibres, wherein the fibres may be covered with a (fibrous) thermoplastic or thermoset resin. Optionally fibre bundles with different diameters may be used. Alternatively the fibre bundles may be included in a tape material. Suitable reinforcing fibres included: carbon fibres, glass fibres, aramid fibres and the like.
A ccordi ng to an exempl ary embodi ment, the fi rst fi bre bundl es are prepared as a so-called 'towpreg₋. In this configuration the fibre bundles are prepared by bundling fibres and pre-i mpregnati ng the fi bres by a thermoset resin.

A ccordi ng to an exemplary embodiment, the second fibre bundles for the one or more braided layers may be bundled dry, i.e. not impregnated with resin, such as a dry carbon fibre or the like.

### Brief description of the figures

The accompanying drawings are used to illustrate presently preferred non-limiting exemplary embodiments of devi ces of the present invention. The above and other advantages of the features and obj ects of the i nventi on will become more apparent and the i nventi on will be better understood from the following detailed descri pti on when read in conjunction with the accompanyi ng drawings, in which:
Figures 1A and 1 B illustrate schematically a cross section and a partially cut perspective view of a pressure vessel according to a first exemplary embodiment;
Figures 2A and 2B illustrate schematically two exemplary variants of the embodiment of figure 1;
Figure 3 illustrates schematically a cross section of a pressure vessel according to a second exemplary embodiment;
Figures 4A and 4B illustrate schematically two exemplary variants of the embodiment of figure 3;
Figures 5A-5C illustrate schematically three exemplary embodiments of the method where a hoop winding layer is formed in the same movement pass as a braided layer;
Figure 6 illustrates schematically another exemplary embodiment of the method; and
Figure 7 illustrates schematically another exemplary embodiment of the method where a braided hoop wrapping layer is formed in the same movement pass as another braided layer.

### Description of embodiments

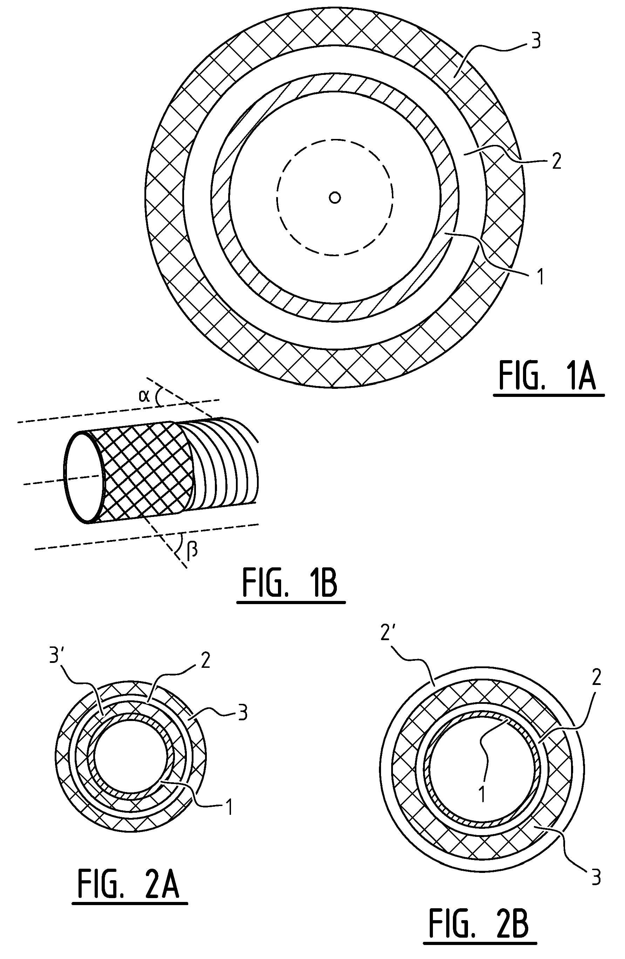

Figure 1A illustrates schematically a cross section of an exemplary embodiment of a pressure vessel comprising a liner 1 and an outer layer 2, 3 comprising a resin. The outer layer comprises a wrappi ng layer 2, here a wi ndi ng layer 2 wound around the liner 1 usi ng a fi rst fi bre bundle, and a braided layer 3 braided around the winding layer 2 using a second fibre bundle. The winding layer 2 and braided layer 3 form together an outer layer around the liner 1. In this exemplary embodiment, the braided layer 3 is arranged directly on top of the wi ndi ng layer 2, and the wi ndi ng layer 2 is arranged directly around the liner 1. Preferably, the winding layer 2 comprises a hoop winding with a winding angle a between 75 and 105 degrees with respect to the axial direction of the liner, more preferably between 80 and 100 degrees, and most preferably between 85 and 95 degrees. The winding angle a, also called the first fibre angle, is shown in figure 1 B. In that way, the winding layer 2 allows a good absorption of the radial forces, and the braided layer 3 can provide burst resistance. Indeed, by applying the braided layer 3 around the winding layer 2, the burst resistance is improved since the braided layer 3 avoids that small parts burst away in the event of an explosion. Preferably, the braided layer 3 is applied with a braid angle b, also called the second fibre angle below 75 degrees with respect to the axial direction of the cylindrical portion, more preferably below 70 degrees, and most preferably below 65 degrees. In an exemplary embodiment, the second fibre angle b is between 30 and 75 degrees, preferably between 30 and 70 degrees, more preferably between 30 and 65 degrees.

Figures 2A and 2B illustrate schematically cross sections of two further exemplary embodiments of a pressure vessel comprising a liner 1 and an outer layer 3°, 2, 3; 2, 3, 2° comprising a resin. In figure 2A the outer layer comprises a winding layer 2 and two braided layers 3, 3°. One braided layer 3° is arranged di rectly around the liner 1. The wi ndi ng layer 2 is wound around the braided layer 3°, and a further braided layer 3 is braided around the winding layer 2. The braided layer 3°, the winding layer 2, and the further braided layer 3 form together an outer layer around the liner 1. In this exemplary embodiment, the braided layer 3 is arranged directly on top of the winding layer 2. Preferably, the winding layer 2 comprises a hoop winding with a winding angle between 75 and 105 degrees with respect to the axi al di recti on of the liner, more preferably between 80 and 100 degrees, and most preferably between 85 and 95 degrees. In that way, the winding layer 2 allows a good absorption of the radial forces, and the further braided layer 3 can provide burst resistance. Indeed, by applying the braided layer 3 around the winding layer 2, the burst resistance is improved since the braided layer 3 avoids that small parts burst away in the event of an expl osi on. By having a combination of two braided layers 3, 3° and a winding layer 2, the absorbing of the radial and axial forces can be improved with a reduced amount of fibres.

In figure 2B the outer layer comprises two winding layers 2, 2° and a braided layer 3. One winding layer 2 is arranged di rectly around the liner 1. The braided layer 3 is wound around the wi ndi ng layer 2, and a further winding layer 2" is wound around the braided layer 3. The winding layer 2, the braided layer 3, and the further winding layer 2° form together an outer layer around the liner 1. Preferably, the wi ndi ng layer 2 and/or the further wi ndi ng layer 2° comprises a hoop wi ndi ng with a wi ndi ng angle e between 75 and 105 degrees with respect to the axial direction of the liner, more preferably between 80 and 100 degrees, and most preferably between 85 and 95 degrees. In that way, the wi ndi ng layer 2 allows for a good absorpti on of the radi al forces. Further, by having the combi nati on wi ndi ng layer 2 ⁻ braided layer 3 ⁻ further wi ndi ng layer 2°, the further wi ndi ng layer 2" may compress the braided layer 3, further improving the strength of the pressure vessel.

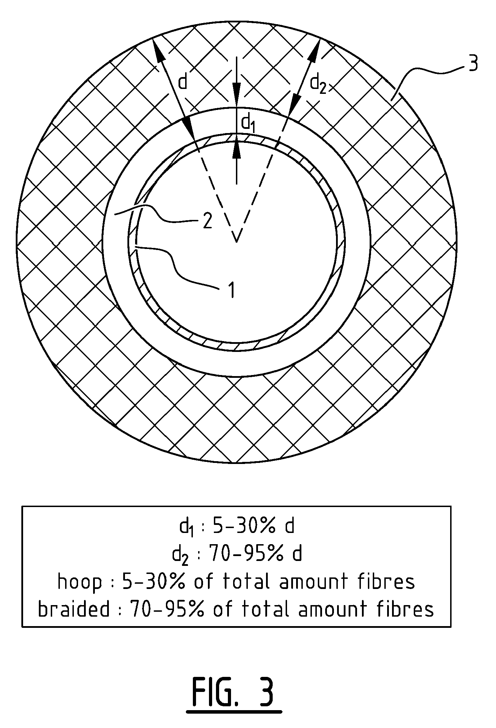

Figure 3 illustrates schematically a cross section of a further exemplary embodiment of a pressure vessel compri si ng a liner 1 and an outer layer 2, 3 compri si ng a resin, similar to the embodi ment of figure 1, but with an indication of the fibre content in the various layers 2, 3 of the outer layer. The features that have been described for figure 1 also apply for figure 3. The outer layer comprises a wi ndi ng layer 2 wound around the liner 1 usi ng a first fibre bundle, and a braided layer 3 braided around the wi ndi ng layer 2 usi ng a second fi bre bundle.

The winding layer 2 has a thickness d1 which is preferably between 5 and 30 percent of the total thickness d of the outer layer. The braided layer 3 has a thickness d2 which is preferably between 70 and 95 percent of the total thickness d of the outer layer. The total thickness d of the outer layer is typically between 5 and 50 mm, depending on the diameter of the pressure vessel and the required strength. It is noted that other thickness percentages are also possible.

The winding layer 2 comprises preferably between 5 and 30 weight percent of the total fi bre content in the outer layer, more preferably between 5 and 25 weight percent, and most preferably between 5 and 20 weight percent. The braided layer 3 comprises preferably between 70 and 95 weight percent of the total fi bre content in the outer layer, more preferably between 75 and 95 weight percent, and most preferably between 80 and 95 weight percent By combining a hoop winding layer 2 with a braided layer 3 in accordance with a particular balance between the fibre content in the winding layer 2 and the fibre content in the braided layer 3, higher pressures can be resisted with a lower amount of fibres. Further, the hoop winding layer 2 will be better suited to withstand radial forces while the braided layer 3 is suited to withstand axial forces. It is noted that the weight percentage values may be chosen independently of the thickness values and percentages mentioned in the previous paragraph.

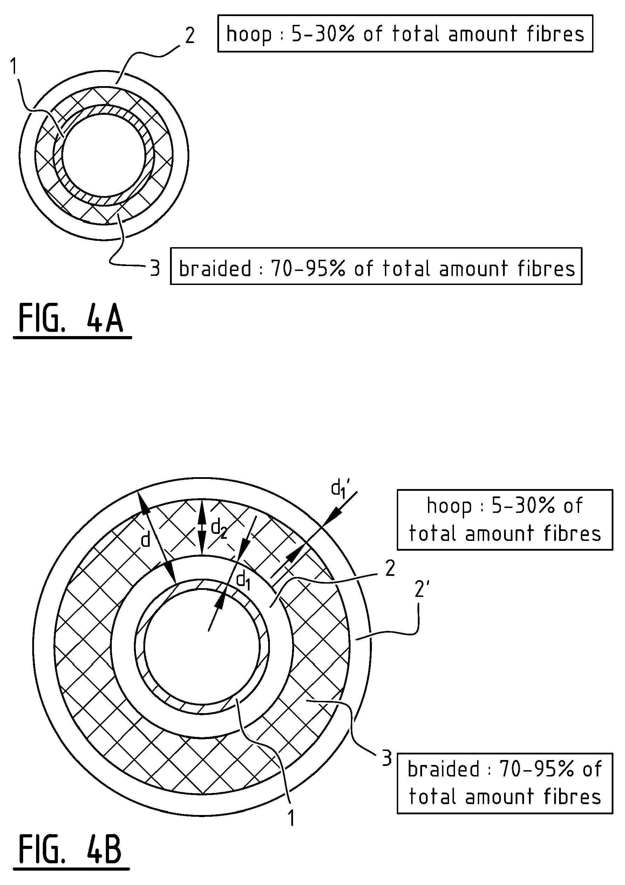

Figure 4A illustrates schematically a cross section of an exemplary embodiment of a pressure vessel compri si ng a liner 1 and an outer layer 2, 3 compri si ng a resin, similar to the embodi ment of figure 3, but with the hoop winding layer 2 on top of the braided layer 3. Also in this embodiment, the winding layer 2 has a thickness d1 which is preferably between 5 and 30 percent of the total thickness d of the outer layer, and the braided layer 3 has a thickness d2 which is preferably between 70 and 95 percent of the total thickness d of the outer layer. The winding layer 2 comprises preferably between 5 and 30 weight percent of the total fibre content in the outer layer, more preferably between 5 and 25 weight percent, and most preferably between 5 and 20 weight percent. The braided layer 3 comprises preferably between 70 and 95 weight percent of the total fibre content in the outer layer, more preferably between 75 and 95 weight percent, and most preferably between 80 and 95 weight percent Compared to the embodi ment of figure 3, the embodi ment of figure 4A has the di sadvantage that the burst resi stance will be I ess, but the braided layer 3 will be compressed by the hoop wi ndi ng layer 2 leading to an improved strength.

Figure 4B illustrates schematically a cross section of an exemplary embodiment of a pressure vessel compri si ng a liner 1 and an outer layer 2, 3, 2" compri si ng a resin, simillar to the embodiment of figure 2B, but with an indication of the fibre content in the various layers 2, 3, 2" of the outer layer. The features that have been described for figure 2B also apply for figure 4B. The wi ndi ng layer 2 has a thickness d1, and the second wi ndi ng layer 2" has a thickness d1°. The sum of the thicknesses d1+d1° is preferably between 5 and 30 percent of the total thickness d of the outer layer. The braided layer 3 has a thickness d2 which is preferably between 70 and 95 percent of the total thickness d of the outer layer. Preferably, the winding layer 2 and the further winding layer 2° comprise together between 5 and 30 weight percent of the total fi bre content in the outer layer, more preferably between 5 and 25 weight percent, and most preferably between 5 and 20 weight percent. The braided layer 3 comprises preferably between 70 and 95 weight percent of the total fibre content in the outer layer, more preferably between 75 and 95 weight percent, and most preferably between 80 and 95 weight percent

In the embodiments of figures 2A-2B, 3, 4A-4C, the winding angle of layers 2, 2"and the braid angle of layer 3 may be similar to the val ues disclosed above for figure 1B for the wi ndi ng angle e a and the braid angle b, respectively. It is further noted that the winding angle of layer 2 and of layer 2° may be different. Also, it is noted that layers 2, 2° may be braided layers with a first fibre angle (braid angle) between 80 and 100 degrees.

A ccordi ng to an exempl ary embodi ment, the one or more fi rst and/or the one or more second fi bre bundles used for one or more winding layers 2, 2° and one or more braided layers 3, 3°, respectively, comprise any one or more of the following: a commingled yarn comprising fibre filaments and thermoplastic filaments, a thermoplastic prepreg, a tape comprising fi bre filaments and a thermoplastic prepreg, a towpreg, etc.

In the exemplary embodiments above, the liner 1 may be moulded from a material having good gas barrier properties, e.g. blow moulded, injection moulded or rotation moulded. In an exemplary embodiment, the liner 1 is moulded by a blow moulding method using polyamide in order to obtain a liner with a good dimensional stability and chemical resistance as well as good gas barrier properties. The material to form the liner is not limited to polyami de. For example, any thermoplastic material having good gas barrier properties such as high-density polyethylene or the like, or metallic materials such as aluminium base alloys or the like may also be used to prepare the liner. The liner 1 may also consist of a multilayer structure.

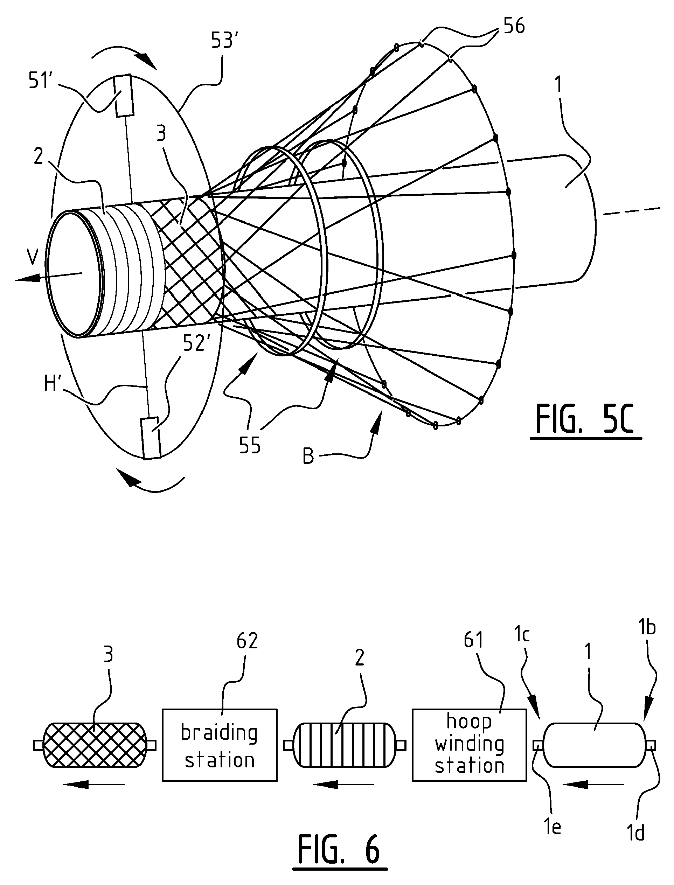

The liner 1 comprises a cylindrical porti on 1a and two dome porti ons 1 b, 1 c formed at both ends of the cylindrical portion, see also figure 6. A metal mouth piece 1d, 1 e may be attached to the top of each dome portion 1 b, 1 c.

Fibre bundl es for a hoop wi ndi ng 2, 2° may be prepared as follows. Carbon fibres are bundl ed to prepare a fibre bundle and may be covered with a (fibrous) thermoplastic or thermoset resin. In exemplary embodiments of the invention, fibre bundles with different diameters may be used. Alternatively, the fibre bundles may be included in a tape material. Also other reinforcing fibres such as gl ass fibres, aramid fibres or the like may be used. Optionally, the outer porti on of carbon fibres may be protected by covering them with glass fibres or the like.

Fibre bundles for a braided layer 3, 3° may be prepared as follows. The fibre bundles may be dry bundles, i.e. not impregnated with resin, such as a dry carbon fibre or the like.

In exemplary embodiments, the length of the pressure vessel is between 350 mm and 1500 mm, and the diameter of the vessel is between 100 and 600 mm. The thickness of the liner is typically between 1 and 3 mm. The thickness d of the outer layer is typically between 5 and 50 mm.

Figure 5A illustrates a first embodiment of the method. In this embodiment, there is used a machi ne whi ch combines features of a ri ng wi ndi ng machine with features of a braiding machi ne to combine both processes. The machine comprises a winding assembly with a winding ring 53 with multiple winding heads 51, 52 mounted for being rotated around a liner 1 while liner 1 moves forward in a direction V. The machine further comprises a braiding assembly with two guide rings 55 and a plurality of moveable weft and warp spools 56 mounted on carri ers (not shown) that move in the spool plane. Weft and warp yarns are pulled from the weft and warp spools 56. The warp spools move clockwise while the weft spools move counter-clockwise, both with the same speed. The warp and weft yarns interlock, forming a closed bi axial fabric on the mandrel. Optionally, a stem yarn appl i cati on means for applying stem yarns extending in an axi al di recti on of the liner can be inserted to form a triaxial braid (not shown). The braiding assembly is provided downstream of the wi ndi ng assembly such that fi rst a wi ndi ng layer is applied and then a braided layer. However, the set-up may be such that the yarns B and/or the gui de ri ng 56 surround the wi ndi ng assembly.

The liner 1 moves through the wi ndi ng ri ng 53 while the hoop wi ndi ng heads 51, 52 turn around the liner axis to arrange the hoop winding 2. For the first hoops H, the fibres may be held in a fixed position. Dry fibre(s) can be hold e.g. mechanically (e.g. a robot arm with an adapted tool), or by using a binder (blown on the fibres), or stapled, or gl ued, or welded (if a thermoplastic resin matrix is present). Next, the liner 1 moves through the guide rings 55 of the braiding assembly, and a braided layer 3 is applied with yarns B.

In a possible embodiment, the hoop wi ndi ng f i bres are cut at the end of the wi ndi ng step, when arriving to the opposite section of the liner. Again, dry fibre(s) can be fixed by using a binder (blown on the fibres), or stapled, or glued, or welded (if a thermoplastic resin matrix is present). This will allow achieving an outer layer comprising a hoop layer 2, followed by a braided layer 3.

In a possible embodiment, the hoop wi ndi ng fibres are positioned through the braided layer B in order to be able to restart the operation when the cylinder is moving in the opposite di recti on for the next layers during the process. This will allow achieving an outer layer comprising a hoop layer, followed by a braided layer, followed by a hoop layer, followed by a braided layer, etc.

Figure 5B illustrates a second embodiment of the method, wherein a hoop layer 2 is arranged around a liner 1 in the same movement pass with a braided layer 3, and a further hoop layer 2°. The wi ndi ng layer 2 is applied by rotati ng at least one hoop wi ndi ng head 51, 52 around the liner 1 whilst moving the liner 1 in the axial direction V. N ext, a braided layer 3 is applied by moving the liner 1 through a braiding assembly 55, 56, such that a braided layer 3 is applied after said winding layer 2 during the same movement pass of the liner 1. Downstream of the braiding assembly 55, 56, there is provided a further winding assembly 51°, 52°, 53° for applying a further winding layer 2°, in the same movement pass as the one used for the winding layer 2 and the braided layer 3. The skilled person understands that a further braiding assembly could be provided if it is desirable to apply a further braided layer on the further winding layer 2°.

Figure 5C illustrates a third embodiment of the method, wherein a braided layer 3 is arranged around a liner 1 in the same movement pass as a winding layer 2. In this embodiment, first a braided layer 3 is applied by moving the liner 1 through a braiding assembly 55, 56, whereupon a wi ndi ng layer 2 is applied i mmedi ately after the appl i cati on of sai d braided layer 3 by rotati ng at least one hoop wi ndi ng head 51, 52 around the liner 1, downstream of the brai di ng assembly 55, 56, such that the winding layer 2 is applied after the braided layer 3 duri ng the same movement pass of the liner 1.

The skilled person understands that any number of layers can be real i zed with such a combined machine, wherein for every movement pass one or more hoop winding assemblies and one or more braiding assemblies may be activated.

In other exempl ary embodiments, a fi bre rei nforced tape may be used for the hoop wi ndi ng. Such a tape may be welded and compressed usi ng a roller on the mandrel to ensure a correct wi ndi ng.

After the dry wi ndi ng process combi ni ng the brai di ng and hoop wi ndi ng four opti ons can be considered. Firstly, if a thermoplastic matrix is included i n the yarn, e.g. if commi ngl ed yarns are used, then a bladder inflation moulding process may be used for the manufacturing and consolidation of the composite reinforcement Secondly, if dry yarns are used, a resin transfer moulding (RTM) process or the like may be used for the manufacturing and consol i dati on of the composite reinforcement. Thirdly, if a towpreg based yarn is used, a consolidation process based on heating may be applied. Fourthly, if dry yarns are used, the consolidation can be based on reactive thermoplastic polymerization, RTM (Resin Transfer Molding), or infusion of a thermoset or thermoplastic resin matrix.
In an exemplary embodiment, the braiding assembly 55, 56 may be configured to braid the total surface of the liner while winding heads 51, 52 may be used to cover only the cylindrical area of the liner with hoops, preferably at 90é+/-10é.

Figure 6 illustrates a second embodiment of the method. In this embodiment there is used a hoop winding station 61 followed by a braiding machine 62 to combine both processes. The hoop winding station 61 may be any suitable station configured for applying a hoop winding 2 on a liner 1. The braiding station 62 may be any suitable station configured for applying a braided layer 3 on a liner 1 on which a hoop wi ndi ng 2 has been arranged. The skilled person understands that any number of layers can be realized with stations 61, 62, by passing the liner a number of times through these stations in a predetermined order.

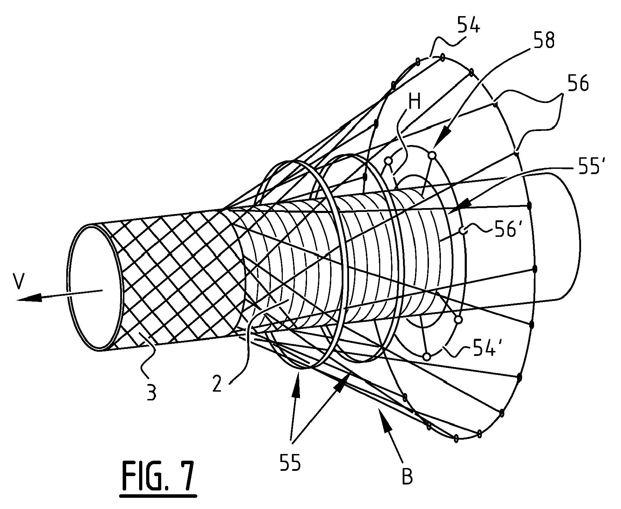

Figure 7 illustrates a further exemplary embodiment of the method and apparatus. In this embodiment there is used a machine which combines features of a first braiding machine operating with a braiding angle between 80 and 100 degrees, with features of a second braiding machine operating with a braiding angle below 75 degrees, to combine both processes. The machine comprises a first braiding assembly mounted for braiding a first 'hoop₋ braided layer while liner 1 moves forward in a direction V. The first braiding assembly comprises a braiding ring 54° with a plurality of moveable weft and warp spools 56° and a guide ring 55". For example, only one warp spool 56" may be operated to apply one first fibre bundle (also called first yarn) with a first fibre angle between 80 and 110 degrees, or a plurality of warp spools 56" may be operated to apply a plurality of first fibre bundl es (also called a plurality of first yarns) si multaneously.

The apparatus of figure 7 further comprises a second braiding assembly with two guide rings 55 and a braiding ring 54 with a plural ity of moveable weft and warp spools 56 mounted on carriers (not shown) that move in the spool plane. Weft and warp yarns B are pulled from the weft and warp spools 56. The second braiding assembly with spool 56 is provided downstream of the first braiding assembly with spools 56° such that first a 'hoop_ braided layer is applied and then a 'normal_ braided layer. The configurati on may be such that the yarns B and/or the gui de ri ng 56 surround the braiding ring 54 of the first braiding assembly.

It is noted that conventional braiding assemblies may be used in embodiments of the inventions. In such a braiding assembly the spools may be oriented parallel to the movement direction V, or may be oriented in a radial direction perpendicular to the movement direction V. In yet other embodiments the spools may be oriented under an angle with respect to the movement direction V.

### EXAMPLE 1

Now an example of method for manufacturing a pressure vessel is described. In this example, a pressure vessel according to figure 3 is manufactured using the method of figure 5A. The liner 1 is blow moulded in a polyamide material. A first hoop winding layer 2 is applied, directly followed by a braided layer 3 using first and second fibre bundles with the properties specified in the table below.

| | Material fibres | Weight% of carbon | Thickness of layer | Type of fibre bundle |
|---|---|---|---|---|
| Winding layer 2 | carbon | 17% | 4mm | Dry carbon fibre bundle |
| Braided layer 3 | carbon | 83% | 7mm | Dry carbon fibre bundle |

From the table above it can be derived that the percentage of carbon fibres in the winding layer 2 with respect to the total weight of the fibres is 17 weight %, and that the percentage of carbon fibres in the braided layer 3 with respect to the total weight of the fibres is 83 weight %.

### EXAMPLE 2

Now an example of a method for manufacturi ng a pressure vessel is described. In this example, a pressure vessel according to figure 2B or figure 4B is manufactured using the method of figure 5B. The liner 1 is blow moulded in a polyamide material. A first hoop winding layer 2 is applied, directly followed by a braided layer 3, and further followed by a second hoop winding layer 2° using fibre bundles with the properties specified in the table below.

| | Material fibres | W eight % of fibre | Thickness of layer | Type of fibre bundle |
|---|---|---|---|---|
| Winding layer 2 | carbon | 20% | 4,5mm | T owpreg: Impregnated carbon fibre bundle |
| Braided layer 3 | carbon | 75% | 6mm | T owpreg: Impregnated carbon fibre bundle |
| Winding layer 2 | glass | 5% | 1mm | T owpreg: Impregnated glass fibre bundle |

From the table above it can be derived that the percentage of carbon and glass fibres in the winding layers 2, 2° with respect to the total weight of the fibres is 25 weight %, and that the percentage of carbon fibres in the braided layer 3 with respect to the total weight of the fibres is 75 weight %.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protecti on which is determined by the appended claims.

## Claims

1. A method for forming an outer layer around a liner having a cylindrical porti on, in order to obtain a pressure vessel, said method comprising:
forming one or more hoop wrappi ng layers by wrappi ng one or more fi rst fi bre bundl es with a fi rst fi bre angle between 80 and 100 degrees with respect to the axial direction of the cylindrical portion;
forming one or more braided layers by braiding one or more second fibre bundles with a second fibre angle below 75 degrees with respect to the axial direction of the cylindrical portion;
wherein said forming of the one or more winding and braided layers is performed such that said one or more hoop wrapping and braided layers together form an outer layer around the cylindrical portion of the liner, said outer layer containing a total fibre content;
wherein said one or more hoop wrappi ng layers are formed such that they comprise between 5 and 30 weight percent of the total f i bre content of the outer layer; and wherein said one or more braided layers are formed such that they comprises between 70 and 95 weight percent of the total fi bre content

2. The method of claim 1, wherein the forming of the one or more hoop wrapping layers and braided layers is such that a braided layer (3) of the one or more braided layers is formed around a hoop wrapping layer (2) of the one or more hoop wrapping layers.

3. The method of claim 1 or 2, wherein a hoop wrapping layer (2) of the one or more hoop wrappi ng layers is formed di rectly on top of the liner.

4. The method of any one of the previous claims, wherein a hoop wrappi ng layer of the one or more hoop wrappi ng layers is formed by wi ndi ng a hoop wi ndi ng, sai d hoop wi ndi ng bei ng arranged with a wi ndi ng angle between 80 and 100 degrees with respect to the axi al di recti on of the liner.

5. The method of any one of the previous claims, wherein a hoop wrappi ng layer of the one or more hoop wrappi ng layers is applied by movi ng the liner through a wrappi ng assembly, whilst moving the liner through a braiding assembly such that a braided layer of the one or more braided layers is applied after sai d hoop wrappi ng layer duri ng the same movement pass of the liner.

6. The method of claim 5, wherein the wrapping assembly comprises at least one rotating hoop winding head; or wherein the wrapping assembly comprises a braiding assembly.

7. The method of any one of the previous claims, wherei the forming of the one or more hoop wrapping layers and braided layers is such that a braided layer (3) of the one or more braided layers is formed directly on top of a hoop wrapping layer (2) of the one or more hoop wrappi ng layers.

8. The method of any one of the previous claims, wherein the forming of the one or more hoop wrapping layers and braided layers is such that a braided layer (3) of the one or more braided layers is formed directly on top of a hoop wrapping layer (2) of the one or more hoop wrapping layers, and that a further hoop wrapping layer (2°) of the one or more hoop wrapping layers is formed directly on top of said braided layer (3); or
wherein the forming of the one or more hoop wrappi ng and braided layers is such that a hoop wrappi ng layer (2) of the one or more hoop wrappi ng layers is formed di rectly on top of a braided layer (3) of the one or more braided layers, and that a further braided layer (3°) of the one or more braided layers is formed directly on top of said hoop wrapping layer (2).

9. The method of any one of the previous claims, wherein the one or more first and/or the one or more second fibre bundles comprise any one or more of the following: dry fibres, fibres in a resin matrix, a commi ngl ed yarn comprising fibre filaments and thermoplastic filaments, a thermoplastic prepreg, a tape comprising fibre filaments and a thermoplastic prepreg, a towpreg.

10. A pressure vessel compri si ng a liner having a cylindrical porti on and an outer layer around said cylindrical portion, said outer layer comprising a resin, said outer layer further comprising:
one or more hoop wrappi ng layers of one or more fi rst fibre bundl es wrapped with a first fibre angle between 80 and 100 degrees with respect to the axial direction of the cylindrical portion;
one or more braided layers of one or more second fibre bundles braided with a second fibre angle below 75 degrees with respect to the axial direction of the cylindrical portion;
said one or more hoop wrapping layers and braided layers together forming an outer layer around the cylindrical porti on of the liner, sai d outer layer contai ni ng a total fi bre content;
wherein said one or more hoop wrappi ng layers comprise between 5 and 30 weight percent of the total fibre content of the outer layer; and wherein said one or more braided layers comprise between 70 and 95 weight percent of the total fibre content

11. The pressure vessel of claim 10, wherein a braided layer (3) of the one or more braided layers is arranged around a hoop wrapping layer (2) of the one or more hoop wrapping layers.

12. The pressure vessel of claim 10 or 11, wherein a hoop wrapping layer (2) of the one or more hoop wrapping layers is arranged directly around the liner.

13. The pressure vessel of any one of the claims 10-12, wherein n a hoop wrapping layer of the one or more hoop wrappi ng layers comprises a hoop wi ndi ng, sai d hoop wi ndi ng bei ng arranged with a winding angle between 80 and 100 degrees with respect to the axial di recti on of the liner.

14. The pressure vessel of any one of the claims 10-13, wherein a braided layer (3) of the one or more braided layers is arranged directly on top of a hoop wrapping layer (2) of the one or more hoop wrapping layers.

15. The pressure vessel of claim 14, wherein n a further hoop wrappi ng layer (2°) of the one or more hoop wrapping layers is formed directly on top of the braided layer (3).

16. The pressure vessel of any one of the claims 10-13, wherein n a hoop wrappi ng layer (2) of the one or more hoop wrapping layers is arranged directly on top of a braided layer (3°) of the one or more braided layers, and a further braided layer (3) of the one or more braided layers is arranged directly on top of said hoop wrapping layer (2).

17. The pressure vessel of any one of the claims 10-16, wherein the one or more first and/or the one or more second fibre bundles comprise any one or more of the following: dry fibres, fibres in a resin matrix, a commingled yarn comprising fibre filaments and thermoplastic filaments, a thermoplastic prepreg, a tape comprising fibre filaments and a thermoplastic prepreg, a towpreg.

18. A apparatus for forming an outer layer around a liner in order to obtain a pressure vessel, said apparatus comprising:
a wrapping assembly configured to wrap a wrapping layer around a liner by wrapping one or more fi rst fi bre bundl es;
a braiding assembly configured to form a braided layer around a liner by braiding one or more second fibre bundl es;
wherein said wrapping assembly and said braiding assembly are arranged in-line such that the wrapping layer can be applied by moving the liner through the wrapping assembly,
whilst moving the liner through a braiding assembly such that the braided layer is applied directly after or before the wrapping layer duri ng the same movement pass of the liner.

19. The apparatus of claim 18, wherein the wrapping assembly comprises at least one winding head configured to wind a winding layer.

20. The apparatus of claim 18 or 19, wherein the wrapping assembly is arranged upstream of the at least one brai di ng assembly.

21. The apparatus of claim 19 and 20, wherein the at least one winding head is at least partially surrounded by the braiding assembly.
